# FASCICULE DE BREVET EUROPEEN

(11) **EP 3 145 738 B1**
(45) Date de publication et mention de la délivrance du brevet: **24.03.2021**
(21) Numéro de dépôt: 15728054.6
(22) Date de dépôt: 13.05.2015
(51) Int. Cl.: B60H 3/02, B60H 3/00, F24F 3/16, B60H 1/00

(54) **DISPOSITIF DE TRAITEMENT D'AIR POUR UNE ENCEINTE, À MOYENS D'ASSAINISSEMENT DE LIQUIDE PAR MÉLANGE CONTRÔLÉ D'OZONE**
LUFTBEHANDLUNGSVORRICHTUNG FÜR EINE KAMMER MIT MITTELN ZUR ENTKEIMUNG VON FLÜSSIGKEIT DURCH KONTROLLIERTES MISCHEN VON OZON
AIR-TREATMENT DEVICE FOR A CHAMBER, WITH MEANS FOR SANITISING LIQUID BY CONTROLLED MIXING OF OZONE

(30) Priorité: 23.05.2014 FR 1454639
(43) Date de publication de la demande: 29.03.2017
(73) Titulaire: PSA Automobiles SA, 78300 Poissy (FR)
(72) Inventeur: DUMUR, Denis, 78990 Elancourt (FR); PINTAT, Bruno, 92140 Clamart (FR)
(86) Numéro de dépôt international: PCT/FR2015/051255
(87) Numéro de publication internationale: WO 2015/177437

(56) Documents cités:
- EP-A1- 2 072 940
- WO-A1-2013/068697
- CA-A1- 2 082 733
- FR-A1- 2 720 340
- FR-A1- 2 944 998
- JP-A- H08 327 085

## Description

L'invention concerne les dispositifs de traitement d'air qui sont chargés de transformer un liquide en petites gouttes puis à diffuser ces petites gouttes dans une enceinte d'un système.

Cette invention concerne un véhicule, éventuellement de type automobile, comprenant un habitacle.

Les dispositifs de traitement d'air définis ci-avant comprennent un réservoir stockant un liquide (généralement de l'eau), des moyens de traitement agencés pour transformer ce liquide en petites gouttes, par exemple par nébulisation, brumisation ou pulvérisation, et des moyens de diffusion agencés pour diffuser ces petites gouttes dans une enceinte.

Un tel véhicule est connu par exemple du document WO 2013/068697 A1, qui est considéré comme l'art antérieur le plus proche.

Comme le sait l'homme de l'art, la stagnation du liquide dans un réservoir contenant de l'air favorise, hélas, le développement de bio films et/ou de bactéries et/ou d'algues, qui induisent généralement des odeurs nauséabondes dans l'enceinte concernée, et/ou de virus, qui peuvent ensuite diffuser dans l'enceinte concernée.

Pour limiter de tels développements plusieurs solutions ont déjà été proposées. Une première solution consiste à équiper le réservoir de résistances chauffantes qui sont destinées à chauffer le liquide qu'il contient à une température propre à l'assainir (typiquement entre environ 50°C et environ 70°C). Mais cela augmente notablement le coût du réservoir et complexifie sa fabrication.

Une deuxième solution consiste à adjoindre un produit de traitement (désinfectant ou décontaminant) dans le liquide stocké dans le réservoir, mais, cela peut induire des odeurs désagréables dans l'enceinte. En outre, cela complexifie et/ou augmente l'encombrement du dispositif de traitement d'air et nécessite des interventions manuelles, généralement relativement difficiles (du fait de l'exiguïté), pour renouveler régulièrement le produit de traitement.

Une troisième solution consiste à effectuer des purges régulières du réservoir. Mais cela nécessite des interventions manuelles, généralement relativement difficiles (du fait de l'exiguïté), pour renouveler intégralement et régulièrement le liquide.

L'invention a notamment pour but d'améliorer la situation.

Elle propose notamment à cet effet un véhicule suivant les caractéristiques de la revendication 1.

On peut ainsi assainir rapidement et pour un coût réduit le réservoir et le liquide du dispositif de traitement d'air. En outre, l'assainissement peut être automatisé sans aucune intervention manuelle de maintenance.

Le dispositif de traitement d'air selon l'invention peut comporter d'autres caractéristiques qui peuvent être prises séparément ou en combinaison, et notamment :
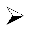 la première zone prédéfinie peut comprendre une partie au moins d'un évaporateur d'une installation de climatisation du système ;
- la durée de production d'ozone peut être comprise entre environ 20 minutes et environ 40 minutes ;
- ses moyens de contrôle peuvent être agencés pour ordonner la production d'ozone de façon périodique ;
- ses moyens de traitement peuvent être agencés pour transformer le liquide en petites gouttes au moyen d'une technique qui est choisie parmi la nébulisation, la brumisation et la pulvérisation.

L'invention propose également un véhicule comprenant une enceinte et un dispositif de traitement d'air du type de celui présenté ci-avant.

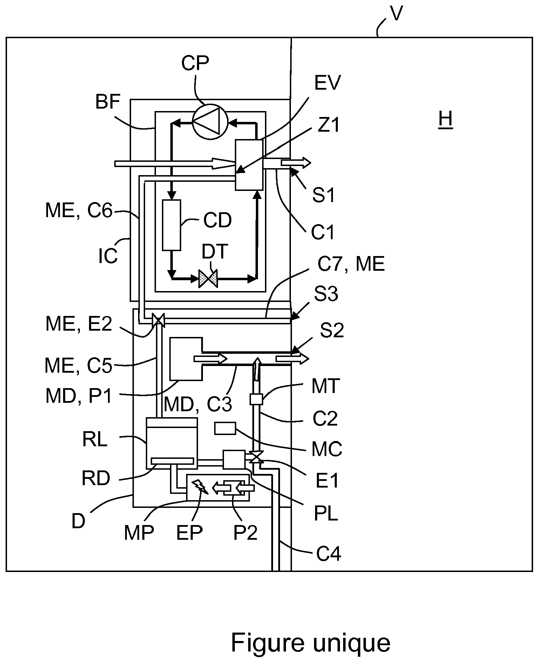

D'autres caractéristiques et avantages de l'invention apparaîtront à l'examen de la description détaillée ci-après, et du dessin annexé, sur lequel l'unique figure illustre schématiquement et fonctionnellement un véhicule comprenant une installation de climatisation et un exemple de réalisation d'un dispositif de traitement d'air selon l'invention.

L'invention a notamment pour but de proposer un dispositif de traitement d'air D destiné à fournir de l'air traité (contenant des petites gouttes de liquide) pour une enceinte H d'un système V.

On considère dans ce qui suit, à titre d'exemple non limitatif, que le système V est un véhicule automobile, comme par exemple une voiture. Par conséquent, l'enceinte H est un habitacle. Mais l'invention n'est pas limitée à ce type de système. Elle concerne en effet tout type de véhicule comportant au moins une enceinte devant être alimentée en air traité, et plus précisément en air contenant des petites gouttes de liquide. Ainsi, l'invention concerne, notamment et non limitativement, les véhicules comprenant un habitacle**,** quel qu'en soit le type : terrestre, y compris les trains et les tramways, maritime ou fluvial, ou aérien.

On a schématiquement représenté sur l'unique figure un véhicule V comprenant une installation de climatisation IC et un exemple de réalisation d'un dispositif de traitement d'air D selon l'invention. Dans cet exemple non limitatif, le dispositif de traitement d'air D ne fait pas partie de l'installation de climatisation IC. Mais dans une variante de réalisation non illustrée le dispositif de traitement d'air D pourrait faire partie de l'installation de climatisation IC.

L'installation de climatisation IC est principalement logée dans le compartiment moteur (derrière le tablier qui permet la séparation d'avec l'habitacle H). Elle comprend notamment un circuit de réfrigération (ou boucle froide) BF chargé(e) de refroidir de l'air destiné, ici, à l'habitacle H, et un circuit de chauffage (ou bouche chaude) chargé(e) de réchauffer de l'air destiné, ici, à l'habitacle H.

Le circuit de réfrigération (ou boucle froide) BF comprend classiquement (et notamment) un compresseur CP, un condenseur CD, un détendeur DT et un évaporateur EV, dans lesquels et entre lesquels circule en circuit fermé, dans des conduits, un fluide frigorigène (ou réfrigérant) dans différentes phases, comme par exemple un CFC.

L'évaporateur EV est chargé de transformer le fluide frigorigène en phase liquide (basse température), issu du détendeur DT, en un fluide frigorigène en phase vapeur, par absorption des calories du flux d'air à refroidir qui est délivré sur une face avant par un groupe moto-ventilateur (non représenté).

Le compresseur CP est chargé de transformer le fluide frigorigène en phase vapeur, issu de l'évaporateur EV, en un gaz surchauffé (par forte augmentation de pression et de température).

Le condenseur CD est chargé de transformer le gaz surchauffé, issu du compresseur CP, en un fluide frigorigène chaud et en phase liquide.

Le détendeur DT est chargé de dépressuriser le fluide frigorigène, sous forme au moins majoritairement liquide qui est issu du condenseur CD, avant qu'il n'alimente l'évaporateur EV. Il délivre donc un liquide refroidi et dépressurisé (ou basse pression).

Le circuit de réfrigération BF est chargé de traiter (refroidir) un flux d'air qui est issu de l'extérieur du véhicule V et/ou de l'habitacle H (air recirculé). Lorsque la fonction de climatisation a été sélectionnée, le flux d'air traverse l'évaporateur EV, où il est refroidi, puis orienté vers un conduit C1 qui alimente au moins une sortie S1 débouchant dans l'habitacle H.

Comme illustré sur l'unique figure, un dispositif de traitement d'air D, selon l'invention, comprend au moins un réservoir RL, des moyens de traitement MT, des moyens de diffusion MD, des moyens de production MP et des moyens de contrôle MC.

Dans l'exemple non limitatif illustré sur l'unique figure, le dispositif de traitement d'air D est implanté dans la planche de bord du véhicule V. Mais cela n'est pas obligatoire. En effet, il pourrait être implanté dans le compartiment moteur, ou dans le pavillon (ou toit) du véhicule V, ou dans une console centrale installée entre deux sièges du véhicule V (afin de participer au confort thermique des passagers installés derrière ces deux sièges), ou dans un siège du véhicule V. Dans d'autres types de système, il pourrait être implanté dans un mur ou un montant ou encore un faux plafond d'un bâtiment, par exemple.

Le réservoir RL est agencé de manière à stocker un liquide, comme par exemple de l'eau. On notera qu'une partie de ce liquide peut provenir de condensats collectés dans l'installation de climatisation IC (par exemple au niveau de son évaporateur EV). On notera également que ce réservoir RL peut être éventuellement alimenté par un autre réservoir, de plus grande capacité, installé (ici) dans le véhicule V.

Les moyens de traitement MT sont agencés pour transformer le liquide stocké dans le réservoir RL en petites gouttes. Par exemple, et comme illustré non limitativement sur l'unique figure, le dispositif (de traitement d'air) D peut comporter une pompe électrique PL, couplée au réservoir RL et aux moyens de traitement MT, éventuellement via une première électrovanne E1, et chargée d'alimenter en liquide les moyens de traitement MT sur ordre des moyens de contrôle MC.

Ces moyens de traitement MT peuvent produire des (très) petites gouttes par nébulisation, brumisation ou pulvérisation, par exemple.

La nébulisation est une technique avantageuse du fait qu'elle permet de produire, sous la forme d'un «brouillard» ou d'une «brume», des gouttes de très petit diamètre (typiquement compris entre environ 2 µm et environ 5 µm) qui, une fois mélangées à un flux d'air, permettent à ce dernier de procurer une sensation de fraicheur à des passagers. Toute technique de nébulisation connue de l'homme de l'art, y compris miniaturisée, peut être ici utilisée. A titre d'exemple, il peut s'agir d'une technique par effet piézoélectrique, bien connue de l'homme de l'art. Il est rappelé que cette technique utilise au moins un oscillateur piézoélectrique (éventuellement miniaturisé), couplé à une chambre de nébulisation et vibrant à très haute fréquence lorsqu'il est alimenté en tension (ici par le réseau électrique du véhicule). Par exemple, dans le cas d'un nébuliseur ultrasonique, la surface vibrante est actionnée par des ultrasons (c'est-à-dire selon une fréquence supérieure à 20000 Hz). Cet oscillateur piézoélectrique est immergé dans le liquide à nébuliser afin de générer à la surface de ce le liquide une brume ou un brouillard composé(e) de gouttelettes de dimensions microscopiques qui sont entrainées par dépression ou au moyen d'un petit flux d'air généré par un ventilateur situé dans les moyens de diffusion, par exemple.

L'alimentation en courant des moyens de traitement MT peut, par exemple, se faire via un câble électrique (non représenté) qui est connecté (ici) au réseau électrique du véhicule V. Mais elle pourrait également se faire via une batterie indépendante, comme par exemple une pile, notamment lorsque le dispositif de traitement D est de type nomade (ou transportable).

Les moyens de diffusion MD sont agencés pour diffuser les petites gouttes dans l'enceinte H.

Les gouttes de liquide qui sont produites par les moyens de traitement MT alimentent ici un conduit C2 qui communique avec un autre conduit C3 des moyens de diffusion MD, au niveau d'un passage, dont l'accès est de préférence contrôlé par les moyens de contrôle MC. Ce conduit C3 est agencé de manière à permettre la circulation d'un flux d'air à traiter destiné à alimenter l'enceinte H (ici une partie au moins d'un habitacle de véhicule V). Il comprend à cet effet au moins une sortie S2 qui communique directement ou indirectement (par exemple via un aérateur) avec l'enceinte H.

On comprendra que l'adjonction de gouttes de liquide au flux d'air (à traiter), qui circule dans le conduit C3 en amont du passage, est destinée à augmenter le taux d'humidité, et ainsi donner une sensation de fraicheur aux passagers du véhicule V.

On notera que dans l'exemple de réalisation non limitatif illustré sur l'unique figure, le flux d'air qui alimente le conduit C3 est fourni par un pulseur (ou ventilateur) P1 qui fait partie du dispositif de traitement d'air D et qui aspire de l'air extérieur (ou de l'air issu de l'habitacle H). Mais cela n'est pas obligatoire. En effet, ce flux d'air pourrait être fourni par une sortie (éventuellement dédiée) de l'installation de climatisation IC.

L'alimentation en courant de l'éventuel pulseur P1 peut, par exemple, se faire via un câble électrique (non représenté) qui est connecté (ici) au réseau électrique du véhicule V. Mais elle pourrait également se faire via une batterie indépendante, comme par exemple une pile.

On notera également que l'accès au passage du conduit C3 peut être contrôlé par un volet (motorisé), par exemple de type drapeau ou papillon, et faisant partie du dispositif de traitement d'air D. L'alimentation en courant de ce volet motorisé peut, par exemple, se faire via un câble électrique (non représenté) qui est connecté (ici) au réseau électrique du véhicule V. Mais elle pourrait également se faire via une batterie indépendante, comme par exemple une pile. Par ailleurs, le contrôle de la position de ce volet peut être assuré par les moyens de contrôle MC. Ce contrôle de position peut, par exemple, se faire en fonction d'une mesure d'humidité effectuée dans l'habitacle H par un capteur. Ce dernier fait éventuellement partie du dispositif de traitement d'air D, mais cela n'est pas obligatoire.

Les moyens de production MP sont agencés pour produire sur ordre de l'ozone (ou O₃) à partir d'un air aspiré. A cet effet, ils peuvent, comme illustré non limitativement sur l'unique figure, comprendre un pulseur (ou ventilateur) P2 et une électrode EP.

Le pulseur (ou ventilateur) P2 est chargé d'aspirer sur ordre de l'air pour alimenter l'électrode EP. Cet air peut provenir de l'extérieur ou de l'intérieur de l'habitacle H. Mais cela n'est pas obligatoire. En effet, cet air pourrait être fourni par une sortie (éventuellement dédiée) de l'installation de climatisation IC.

L'électrode EP est chargée de transformer en ozone (ou O₃) une partie de l'air qui est fourni par le pulseur P2. Cette transformation se fait par ionisation.

L'alimentation en courant du pulseur P2 et de l'électrode EP peut, par exemple, se faire via un câble électrique (non représenté) qui est connecté (ici) au réseau électrique du véhicule V. Mais elle pourrait également se faire via une batterie indépendante, comme par exemple une pile, notamment lorsque le dispositif de traitement D est de type nomade (ou transportable).

Les moyens de contrôle MC sont agencés pour ordonner la production d'ozone par les moyens de production MP pendant une durée d1 choisie, et pour contrôler le transfert de cet ozone produit dans le réservoir RL afin d'assainir ce dernier (RL) et le liquide stocké.

Comme illustré non limitativement sur l'unique figure, le transfert de l'ozone produit dans le réservoir RL peut se faire via un conduit interconnectant la sortie des moyens de production MP à une rampe de diffusion RD logée dans le réservoir RL et chargée de diffuser de façon sensiblement homogène l'ozone dans le liquide stocké dans ce dernier (RL).

La durée d1, pendant laquelle de l'ozone est produit et transféré dans le réservoir RL, peut être comprise entre environ 20 minutes et environ 40 minutes. Cette durée d1 dépend de la capacité de production de l'électrode EP et de la concentration en ozone recherchée dans le liquide. Cette concentration doit demeurer notablement inférieure à un seuil afin de demeurer inoffensive. De préférence, la durée d1 est choisie sensiblement égale à 30 minutes.

On notera que les moyens de contrôle MC peuvent être avantageusement agencés pour ordonner la production d'ozone de façon périodique. Par exemple, ils peuvent être programmés pour utiliser une période de quinze jours. Mais des périodes supérieures ou inférieures à quinze jours peuvent être utilisées.

On notera également qu'il est nécessaire, suivant l'invention, pour une question de sécurité que les moyens de contrôle MC soient agencés pour ordonner la production d'ozone lorsqu'aucune personne n'est présente dans l'enceinte H. Cette information de présence peut être fournie par un équipement du véhicule V, comme par exemple un capteur de présence ou un calculateur couplé à un capteur de présence. Lorsque cette option est présente et que les moyens de contrôle MC sont agencés pour ordonner la production d'ozone de façon périodique, avant de déclencher une telle production les moyens de contrôle MC vérifient préalablement que l'enceinte H est bien vide. Si tel n'est pas le cas, ils repoussent la phase d'assainissement jusqu'à ce que l'enceinte H soit vide. Par ailleurs, si pendant une phase d'assainissement les moyens de contrôle MC sont informés de l'entrée d'une personne dans l'enceinte H, ils interrompent immédiatement cette phase et la recommenceront lorsque l'enceinte H sera de nouveau vide.

On notera également, suivant l'invention, que le dispositif D comprend des moyens d'évacuation ME assurant un couplage entre le réservoir RL et au moins une première zone prédéfinie Z1 située à l'extérieur de l'enceinte H. Ce couplage peut se faire, comme illustré, via au moins un conduit C5. Suivant l'invention, es moyens de contrôle MC sont agencés pour ordonner à un instant choisi une évacuation par ces moyens d'évacuation ME d'une partie au moins du liquide avec de l'ozone avant qu'il ne présente plus de pouvoir d'assainissement.

Lorsque le véhicule V dispose d'une installation de climatisation IC, comme c'est le cas dans l'exemple non limitatif illustré sur l'unique figure, cette première zone prédéfinie Z1 peut avantageusement comprendre une partie au moins de l'évaporateur EV (et en particulier la face avant de ce dernier (EV)). L'évacuation sur la face avant Z1 de l'évaporateur EV d'une partie du liquide contenant de l'ozone encore actif (c'est-à-dire propre à l'assainissement) permet alors d'éviter au moins localement le développement de bio films et/ou de bactéries et/ou d'algues.

Cette évacuation doit se faire avant que l'ozone ne soit plus actif, soit environ vingt minutes après sa production. Par conséquent, il est préférable de transférer immédiatement la portion de liquide avec de l'ozone dans l'enceinte H après la fin de la durée d1 de production d'ozone.

On notera que dans l'exemple non limitatif illustré sur l'unique figure, le couplage entre le réservoir RL et la première zone prédéfinie Z1 se fait au moyen de deux conduits C5 et C6 qui sont interconnectés via une électrovanne E2 (ainsi qu'éventuellement une pompe électrique (non représentée)) pilotée(s) par les moyens de contrôle MC. Cela résulte du fait que les moyens d'évacuation ME comprennent également un conduit C7 comprenant une première extrémité connectée à l'électrovanne E2 et au moins une seconde extrémité comprenant une sortie S3 qui communique directement ou indirectement (par exemple via un aérateur) avec l'enceinte H. On notera que cette sortie S3 pourrait être éventuellement la sortie S2 du conduit C3. Cet aménagement est destiné à permettre un assainissement de l'enceinte H directement avec de l'ozone (sans liquide). Dans ce cas, il faut que le réservoir RL ait été préalablement vidé de son liquide sur ordre des moyens de contrôle MC, avant que ces derniers (MC) déclenchent la production d'ozone et le transfert de ce dernier dans le réservoir RL vide, puis dans les conduits C5 et C7, via l'électrovanne E2.

Ce transfert doit se faire avant que l'ozone ne soit plus actif. Par conséquent, il est préférable de transférer immédiatement l'ozone dans l'enceinte H dès qu'il a été produit. Ce transfert ne se fait pas obligatoirement pendant la durée d1. En fait, il est préférable qu'il se fasse pendant une durée sensiblement inférieure à d1 du fait qu'il n'est pas mélangé au liquide. Par exemple, on peut procéder au transfert pendant environ dix minutes. La durée de transfert dépend notamment de la concentration en ozone.

On notera également que l'assainissement de l'enceinte H peut éventuellement se faire via les moyens de diffusion MD. Pour ce faire, les moyens de contrôle MC doivent être agencés pour ordonner à un instant choisi l'évacuation dans l'enceinte H, par les moyens de traitement MT et les moyens de diffusion MD, d'une partie au moins du liquide avec de l'ozone avant qu'il ne présente plus de pouvoir d'assainissement. On comprendra que dans ce cas du liquide avec de l'ozone est transféré du réservoir RL vers les moyens de traitement MT afin d'être transformé en petites gouttes qui sont ensuite acheminées dans le conduit C3 pour être mélangées à l'air issu (ici) du pulseur P1. L'air traité est ensuite diffusé dans l'enceinte H via la sortie S2.

Ce transfert doit se faire avant que l'ozone ne soit plus actif. Par conséquent, il est préférable de transférer immédiatement la portion de liquide avec de l'ozone dans les moyens de traitement MT après la fin de la durée d1 de production d'ozone.

On notera également, comme illustré non limitativement sur l'unique figure, que la première électrovanne E1 peut être également connectée à une première extrémité d'un conduit C4 comportant en outre une seconde extrémité débouchant à l'extérieur du véhicule V. Une partie au moins du liquide contenu dans le réservoir RL peut ainsi être évacuée à l'extérieur du véhicule V (ou purgé) si les moyens de contrôle MC l'estiment nécessaire après une phase d'assainissement d'une durée d1. De préférence, cette évacuation est déclenchée une fois que l'ozone n'est plus actif, soit au moins vingt minutes après la fin de sa production par les moyens de production MP.

Les moyens de contrôle MC peuvent, par exemple, être réalisés sous la forme d'une combinaison de circuits électroniques (ou « hardware ») et de modules logiciels (ou informatiques ou encore « software »), en particulier lorsque le dispositif D est indépendant de l'installation de climatisation IC. Mais dans une variante de réalisation dans laquelle le dispositif D fait partie de l'installation de climatisation IC, les moyens de contrôle MC peuvent être réalisés sous la forme de modules logiciels implantés par exemple dans un calculateur gérant l'installation de climatisation IC.

L'invention offre plusieurs avantages, parmi lesquels :
- un assainissement rapide et à coût réduit, du fait qu'il ne consomme qu'un peu d'électricité,
- une possibilité d'assainissement complémentaire de l'enceinte et/ou d'un équipement externe à l'enceinte,
- une automatisation de l'assainissement sans aucune intervention manuelle de maintenance.

## Revendications

1. Véhicule (V) comprenant un habitacle définissant une enceinte (H), et comprenant un dispositif de traitement d'air (D) pour ladite enceinte, ledit dispositif (D) comprenant un réservoir (RL) stockant un liquide, des moyens de traitement (MT) agencés pour transformer ledit liquide en petites gouttes et des moyens de diffusion (MD) agencés pour diffuser lesdites petites gouttes dans ladite enceinte (H), **caractérisé en ce qu'**il comprend en outre i) des moyens de production (MP) agencés pour produire sur ordre de l'ozone à partir d'un air aspiré, ii) des moyens de contrôle (MC) agencés pour ordonner ladite production d'ozone lorsqu'aucune personne n'est présente dans ladite enceinte (H) et pendant une durée choisie, et pour contrôler le transfert dudit ozone produit dans ledit réservoir (RL) afin d'assainir ce dernier (RL) et ledit liquide, et et iii) des moyens d'évacuation (ME) comprenant un conduit (C7) comprenant une première extrémité connectée à l'électrovanne (E2) et au moins une seconde extrémité comprenant une sortie (S3) qui communique directement ou indirectement avec l'enceinte (H), la sortie (S3) permettant un assainissement de l'enceinte (H) directement avec de l'ozone, le réservoir (RL) ayant été préalablement vidé de son liquide sur ordre des moyens de contrôle (MC), les moyens de contrôle (MC) déclenchant la production d'ozone et le transfert de dans le réservoir (RL) vide, puis dans le conduit (C7), via l'électrovanne (E2), es moyens d'évacuation (ME) assurant un couplage entre ledit réservoir (RL) et au moins une première zone prédéfinie (Z1) située à l'extérieur de ladite enceinte (H), et **en ce que** lesdits moyens de contrôle (MC) sont agencés pour ordonner à un instant choisi une évacuation par lesdits moyens d'évacuation (ME) d'une partie au moins dudit liquide avec de l'ozone avant qu'il ne présente plus de pouvoir d'assainissement.

2. Véhicule selon la revendication 1, **caractérisé en ce que** ladite première zone prédéfinie (Z1) comprend une partie au moins d'un évaporateur (EV) d'une installation de climatisation (IC) dudit système.

3. Véhicule selon l'une des revendications 1 ou 2, **caractérisé en ce que** lesdits moyens de contrôle (MC) sont agences pour ordonner à un instant choisi une évacuation dans ladite enceinte (H), par lesdits moyens de traitement (MT) et lesdits moyens de diffusion (MD), d'une partie au moins dudit liquide avec de l'ozone avant qu'il ne présente plus de pouvoir d'assainissement.

4. Véhicule selon l'une des revendications 1 à 3, **caractérisé en ce que** ladite durée est comprise entre environ 20 minutes et environ 40 minutes.

5. Véhicule selon l'une des revendications 1 à 4, **caractérisé en ce que** lesdits moyens de contrôle (MC) sont agencés pour ordonner ladite production d'ozone de façon périodique.

6. Véhicule selon l'une des revendications 1 à 5, **caractérisé en ce que** lesdits moyens de traitement (MT) sont agencés pour transformer ledit liquide en petites gouttes au moyen d'une technique choisie dans un groupe comprenant au moins la nébulisation, la brumisation et la pulvérisation.

## Patentansprüche

1. Fahrzeug (V) mit einem Fahrgastraum, der ein Gehäuse (H) definiert, und mit einer Luftbehandlungsvorrichtung (D) für das Gehäuse, wobei die Vorrichtung (D) einen Behälter (RL) umfasst, der eine Flüssigkeit speichert, Verarbeitungsmittel (MT), die angeordnet sind, um die Flüssigkeit in kleine Tropfen zu verwandeln, und Diffusionsmittel (MD), die angeordnet sind, um die kleinen Tropfen in das Gehäuse (Tröpfchen) zu streuen, **dadurch gekennzeichnet**, Außerdem umfasst es i) Produktionsmittel (MP), die so angeordnet sind, dass sie Ozon aus einer Ansaugluft in Ordnung erzeugen, ii) Kontrollmittel (MC), die so angeordnet sind, dass sie die Ozonproduktion anordnen, wenn in der Kammer (H) keine Person anwesend ist, und zwar für einen ausgewählten Zeitraum, und die Übertragung des erzeugten Ozons in den Behälter (RL) steuern, um diesen zu reinigen Behälter (RL) und die Flüssigkeit und iii) Ablassmittel (ME) mit einer Leitung (C7), die ein erstes Ende aufweist, das mit einem Magnetventil (E2) verbunden ist, und mindestens ein zweites Ende, das einen Auslass (S3) aufweist, der direkt oder indirekt mit der Kammer (H) in Verbindung steht, wobei der Auslass (S3) eine direkte Sanierung der Ozon ermöglicht (RL) wurde zuvor auf Anordnung der Kontrollmittel (MC) aus der Flüssigkeit entfernt, wobei die Kontrollmittel (MC) die Ozonproduktion und die Überführung in den leeren Behälter (RL) und dann in den Kanal (C7) über das Magnetventil (E2) auslösen, wobei die Ableitmittel (ME) eine Kopplung zwischen dem Behälter (RL) und mindestens einer Leitung gewährleisten Vordefinierter Bereich (Z1) außerhalb des Behälters (H), und dadurch, dass die Kontrollmittel (MC) so angeordnet sind, dass sie zu einem gewählten Zeitpunkt eine Ableitung mindestens eines Teils der Flüssigkeit mit Ozon durch die Abführmittel (ME) anordnen, bevor sie keine Sanierungsfähigkeit mehr aufweisen.

2. Fahrzeug nach Anspruch 1, **dadurch gekennzeichnet, dass** der erste vorgegebene Bereich (Z1) mindestens einen Teil eines Verdampfers (EV) einer Klimaanlage (IC) des Systems umfasst.

3. Fahrzeug nach einem der Ansprüche 1 oder 2, **dadurch gekennzeichnet, dass** die Überwachungseinrichtung (MC) so angeordnet ist, dass sie zu einem ausgewählten Zeitpunkt eine Ableitung mindestens eines Teils der Flüssigkeit mit Ozon durch die Behandlungseinrichtung (MT) und die Diffusionseinrichtung (MD) in die Kammer (H) anordnet, bevor sie keine Sanierungsfähigkeit mehr aufweist.

4. Fahrzeug nach einem der Ansprüche 1 bis 3, **dadurch gekennzeichnet, dass** die Dauer zwischen etwa 20 Minuten und etwa 40 Minuten liegt.

5. Fahrzeug nach einem der Ansprüche 1 bis 4, **dadurch gekennzeichnet, dass** die Kontrollmittel (MC) so angeordnet sind, dass sie die Erzeugung von Ozon periodisch anordnen.

6. Fahrzeug nach einem der Ansprüche 1 bis 5, **dadurch gekennzeichnet, dass** die Behandlungsmittel (MT) so angeordnet sind, dass sie die Flüssigkeit in kleine Tropfen mittels einer Technik umwandeln, die aus einer Gruppe ausgewählt ist, die mindestens Vernebeln, Vernebeln und Sprühen umfasst.

## Claims

1. Vehicle (V) consisting of a compartment defining a enclosure (H), and comprising an air treatment device (D) for that enclosure, that device (D) consisting of a tank (RL) storing a liquid, means of treatment (MT) arranged to transform that liquid into small drops and means of diffusion (MD) arranged to distribute such small drops in that chamber (H), **characterized in that** it also includes i) means of production (MP) arranged to produce ozone on order from aspirated air, ii) means of control (MC) arranged to order the production of ozone when no person is present in the said chamber (H) and for a chosen period, and to control the transfer of the ozone produced in the said reservoir (RL) in order to clean up the latter (RL) and the said liquid, and iii) means Evacuation (ME) consisting of a duct (C7) consisting of a first end connected to a solenoid valve (E2) and at least a second end consisting of an outlet (S3) which communicates directly or indirectly with the enclosure (H), the outlet (S3) which enables the enclosure (H) to be cleaned directly with ozone, the tank (RL) having previously been emptied of its liquid on the orders of the means of control (MC), means of control (MC) triggering the production of ozone and the transfer of ozone to the empty tank (RL), and then to the duct (C7), via the solenoid valve (E2), means of evacuation (ME) ensuring a coupling between the said tank (RL) and at least one predefined zone (Z1) outside the said enclosure (H), and in so far as such means of control (MC) are to order at a time chosen an evacuation by the said means of evacuation (ME) of at least part of the said liquid with ozone before it no longer has remediation power.

2. Vehicle according to Claim 1, characterized as the first predefined zone (Z1) includes at least one part of an evaporator (EV) of an air conditioning system (IC).

3. Vehicle according to one of claims 1 or 2, **characterized by** the arrangement of the said means of control (MC) to order at a time to evacuate from the said chamber (H), by the said means of treatment (MT) and the said means of diffusion (MD), at least part of the said liquid with ozone before it no longer has remediation power.

4. Vehicle according to one of the claims 1 to 3, **characterized in that** the duration is between about 20 minutes and about 40 minutes.

5. Vehicle according to one of the claims 1 to 4, characterized as the said means of control (MC) are arranged to order the production of ozone on a periodic basis.

6. Vehicle according to one of the claims 1 to 5, **characterized by** the fact that the said means of treatment (MT) are arranged to transform the liquid into small drops by means of a technique chosen in a group comprising at least the nebulization, the foaming and the spraying.
